# EUROPÄISCHE PATENTANMELDUNG

(11) **EP 0 744 318 A2**
(43) Veröffentlichungstag der Anmeldung: **27.11.1996**
(21) Anmeldenummer: 96107554.6
(22) Anmeldetag: 11.05.1996
(51) Int. Cl.: B60R 1/00

(54) **Weitwinkellinse für Fahrzeugheckscheiben**

(30) Priorität: 24.05.1995 DE 29508623 U
(71) Anmelder: Donnelly Hohe GmbH & Co. KG, 97903 Collenberg (DE)
(72) Erfinder: Fürst, Peter, 63927 Bürgstadt (DE)
(74) Vertreter: Zinngrebe, Horst, Dr.rer.nat.

(57) **Zusammenfassung**

Beschrieben wird eine Weitwinkellinse für Fahrzeugheckscheiben, die in einer an der Fahrzeugkarosserie befestigten Führung beweglich gehalten ist.

## Beschreibung

Die Erfindung betrifft eine Weitwinkellinse für Fahrzeugheckscheiben.

Um die Sicht des Fahrers bei Rückwärtsfahrt in einen Bereich zu erweitern, der sich bis nahe an die rückwärtige Begrenzung, üblicherweise die hintere Stoßstange, des Fahrzeuges erstreckt, ist es bekannt, an der Heckscheibe des Fahrzeuges eine Fresnellinse zu befestigen. Diese rückt den für den Fahrer einsehbaren Bereich bis etwa einen Meter an die hintere Stoßstange des Fahrzeuges heran.

Bei normaler Geradeausfahrt befindet sich die Weitwinkellinse im Sichtbereich des Fahrers nach hinten und beeinträchtigt die sonst ungehinderte Sicht auf das Verkehrsgeschehen hinter dem Fahrzeug.

Der Erfindung liegt daher die Aufgabe zugrunde, die Beeinträchtigung der Sicht nach hinten für den normalen Fahrbetrieb, bei dem die Kenntnis fahrzeugnaher Hindernisse hinter dem Fahrzeug nicht erforderlich ist, zu beseitigen.

Dazu ist erfindungsgemäß vorgesehen, daß die Weitwinkellinse in einer an der Fahrzeugkarosserie befestigten Führung beweglich gehalten ist. Damit kann die Weitwinkellinse bei normalem Fahrbetrieb aus dem Sichtbereich des Fahrers nach hinten längs der Führung wegbewegt und nur bei Rangierfahrt nach hinten in den Sichtbereich gebracht werden.

In einer zweckmäßigen Ausführungsform der Erfindung kann sich die Führung etwa parallel zur Unterkante des Heckfensters erstrecken, so daß die nicht benötigte Weitwinkellinse längs der Führung zur Seite aus dem Sichtbereich heraus bewegt werden kann.

Alternativ kann sich die Führung unterhalb des Sichtbereichs abwärts in die Fahrzeugkarosserie erstrecken, so daß die Weitwinkellinse bei normaler Fahrt in die Karosserie abgesenkt werden kann.

In einer weiteren Alternative der Erfindung kann die Weitwinkellinse in einer an der Karosserie angelenkten Halterung gehalten sein, welche ein Abschwenken der Weitwinkellinse nach unten in die Karosserie erlaubt.

Zweckmäßig erfolgt der Antrieb der Weitwinkellinse motorisch, wobei der Antriebsmotor durch Betätigen eines separaten Schalters am Armaturenbrett des Fahrzeuges oder bei Einlegen des Rückwärtsganges über die Zentralsteuerung des Fahrzeugs aktiviert werden kann.

Bevorzugte Ausgestaltungen der Erfindung sind im übrigen in den Unteransprüchen angegeben.

Die Erfindung wird nachstehend anhand des in der beigefügten Zeichnung dargestellten Ausführungsbeispieles im einzelnen beschrieben. Es zeigen:
- Fig. 1: eine schematische Ansicht der Heckklappe eines Fahrzeuges mit Weitwinkellinse;
- Fig. 2: eine schematische Darstellung des Antriebes für die Heckscheibe;
- Fig. 3: einen Ausschnitt aus der Befestigung der Weitwinkellinse;

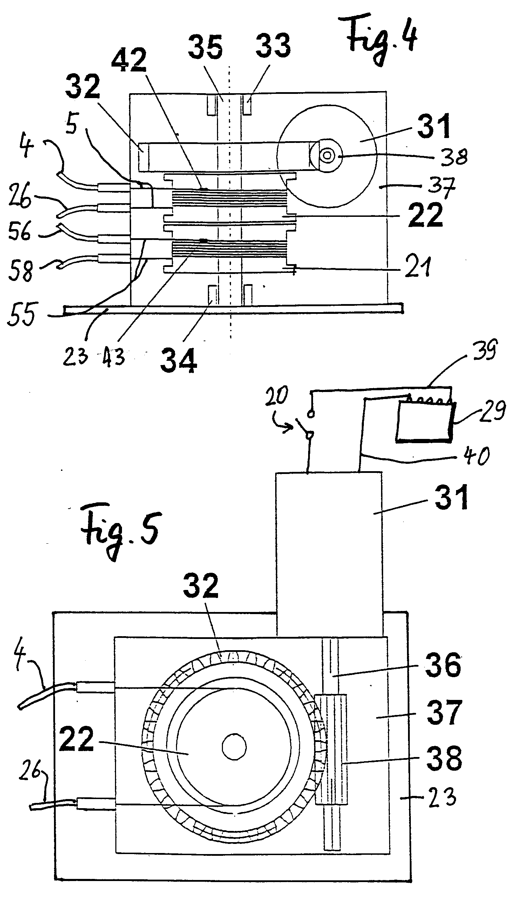

- Fig. 4: eine Draufsicht in schematischer Darstellung auf den Motorantrieb; und
- Fig. 5: eine Seitenansicht des Antriebes aus Fig. 4.

In die im ganzen mit 6 bezeichnete Heckklappe eines Fahrzeuges ist im oberen Teil ein Heckfenster 7 eingelassen, dessen mittlerer Abschnitt 8 der Sichtbereich des Fahrers nach hinten über dessen Innenspiegel ist. Im Sichtbereich 8 befindet sich als Weitwinkellinse 1 eine Fresnellinse, die in ihrer Struktur, ihrem Aufbau und ihren Eigenschaften an sich bekannt ist. Die Weitwinkellinse kann beispielsweise aus einem geprägten Acrylglas bestehen. Die Weitwinkellinse 1 kann sich zweckmäßig einer etwaigen Wölbung des Heckfensters 7 durch entsprechende Form anpassen.

Der Unterrand der Weitwinkellinse 1 befindet sich bereits verdeckt innerhalb der Karosserie, d. h. zwischen dem Karosserieblech der Heckklappe 6 und einer inneren Abdeckung desselben und ist in ein Spannband 9 zur Befestigung der Linse eingelassen.

Die Weitwinkellinse 1 ist in einer im ganzen mit 10 bezeichneten Führung gehalten, die sich ebenfalls verdeckt zwischen dem äußeren Karosserieblech der Heckklappe 6 und der inneren Abdeckung befindet und am Karosserieblech festgeschraubt ist.

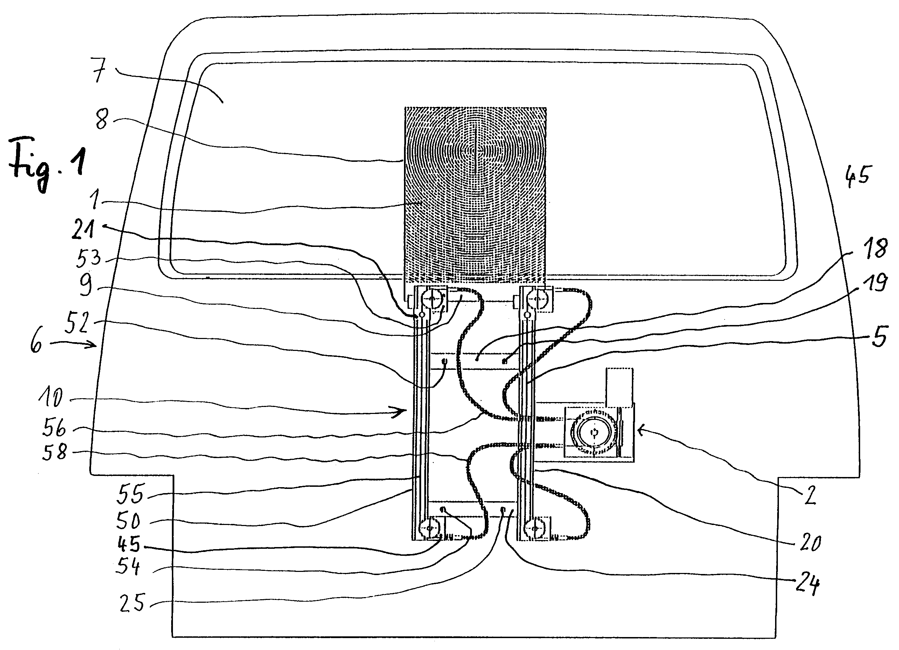

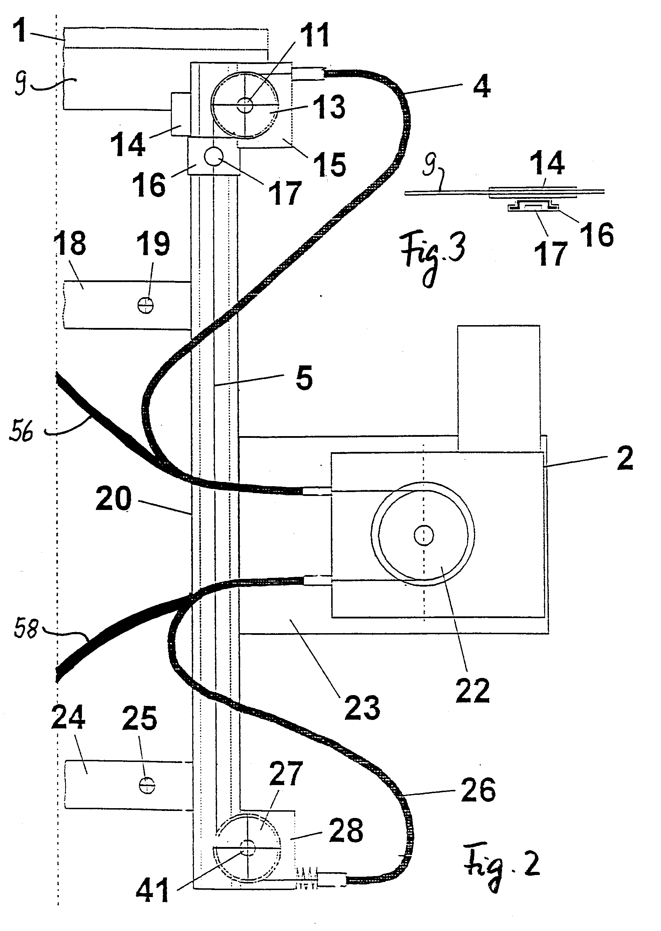

In Fig. 2 ist zur Funktionserklärung nur die rechte Hälfte der Führung 10 gemäß Fig. 1 dargestellt, die linke Hälfte ist bis auf den Antrieb 2 identisch aufgebaut.

An den Enden einer sich vertikal erstreckenden Profilschiene 20 sind zwei freilaufende Rollen 13, 27 auf den an die Profilschiene 20 angeformten quer abstehenden Befestigungsblechen 15, 28 angebracht. Diese Rollen 13, 27 sind zur Führung eines Stahlseils 5 über der langen Mitte der Profilschiene 20 auf den feststehenden zur Längserstreckung der Profilschiene 20 senkrechten Achsen 11, 41 drehbar gelagert.

Ein Stahlseil 55 ist über der langen Mitte einer Profilschiene 50, die sich mit Abstand parallel zur Profilschiene 20 erstreckt, durch weitere drehbare Rollen an den gegenüberliegenden Enden der Profilschiene 50 geführt, die in Anordnung und Drehachsen den Rollen 13 und 27 entsprechen.

Über zwei Verbindungslaschen 18, 24 ist die Profilschiene 20 mit der zugehörigen, parallelen Profilschiene 50 verbunden und stabilisiert. Über Befestigungsbohrungen 19, 25, 52, 54 in den Verbindungslaschen 18, 24 kann die komplette Führung 10 an dem Karosserieblech der Heckklappe 6 befestigt werden.

Ein Gleitstück 16 umfaßt die Profilschiene 20 und kann sich längs dieser auf- und abwärts bewegen. Ein Spannhalter 14 ist mit dem Gleitstück 16 verbunden. Der Spannrand 9 der Linse 1 wird in die Backen des Spannhalters 14 eingespannt und damit die Linse 1 festgehalten (Fig. 3).

Das Stahlseil 5 ist an dem Gleitstück 16 über ein Nieteinlegeteil 17 fest fixiert, welches in eine Bohrung des Gleitstückes 16 eingepreßt ist. Mit der Auf- und Abwärtsbewegung des Gleitstückes 16 wird daher das Stahlseil 5 mitgenommen.

Zwischen einer Antriebseinheit 2 und dem Befestigungsblech 15 ist das Stahlseil 5 von einem in Längsrichtung nicht verschiebbaren Mantel 4 umgeben, dessen Enden sich einerseits an dem Befestigungsblech 15 und andererseits am Gehäuse 37 der Antriebseinheit 2 abstützen. Entsprechend ist der sich zwischen dem Gehäuse 37 der Antriebseinheit 2 und dem Befestigungsblech 28 erstrekkende Teil des Stahlseils 5 von einem in Längsrichtung praktisch unverschiebbaren Mantel 26 umgeben, der sich an dem Gehäuse 37 einerseits und an dem Befestigungsblech 28 andererseits abstützt.

An der Profilschiene 50 ist ein weiteres Gleitstück 21 vorgesehen, welches wie das Gleitstück 16 längs der Profilschiene 50 verschiebbar ist und an welchem das Stahlseil 55 verankert ist. Zwischen einem am oberen Ende der Profilschiene 50 angeordneten Befestigungsblech 53 und dem Gehäuse 37 ist das Stahlseil 55 von einem Mantel 56 umgeben, während das Stahlseil 55 zwischen einem unteren Befestigungsblech 45, welches dem Befestigungsblech 28 entspricht, und dem Gehäuse 37 mit einem Mantel 58 umgeben ist.

Die Antriebseinheit 2 umfaßt einen auf einer Platte 23 montierten Gleichstrommotor 31, der aus der Batterie 29 des nicht dargestellten Fahrzeuges über Stromversorgungsleitungen 39, 40 mit Strom gespeist wird, wenn der in der Versorgungsleitung 39 angeordnete und zweckmäßig im Bereich des Fahrers am Armaturenbrett des Fahrzeugs angeordnete Schalter 20 geschlossen ist. Der Gleichstrommotor 31 sitzt am Getriebegehäuse 37, wobei auf seine in das Getriebegehäuse 37 hineinreichenden Motorwelle 36 eine Schnecke 38 aufgekeilt ist, mit der ein Ritzel 32 kämmt. Das Ritzel 32 sitzt unverdrehbar auf einer Welle 35, die sich vertikal durch das Gehäuse 37 erstreckt und in gegenüberliegenden Lagern 33, 34 drehbar gehalten ist. Auf der Welle 35 sitzen von oben nach unten hintereinander unverdrehbar das Ritzel 32 sowie zwei Seiltrommeln 21, 22. Bei in einer Drehrichtung aktiviertem Gleichstrommotor 31 werden daher die Seiltrommeln 21, 22 in einem Drehsinn mit der Welle 35 in Umdrehung versetzt, während bei einer Aktivierung des Gleichstrommotors 31 in umgekehrter Drehrichtung auch die Seiltrommeln 21, 22 sich in umgekehrter Richtung drehen. Bei deaktiviertem Elektromotor 31 bleiben die Seiltrommeln 21, 22 wegen ihrer starren Kopplung mit dem Elektromotor auch dann stehen, wenn sich die Linse 1 in angehobener Lage gemäß Figur 1 befindet.

Das Stahlseil 5 ist auf die obere Seiltrommel 22 aufgewickelt und mit seinem Ende etwa bei 42 auf der Trommelnabe festgelegt. Entsprechend ist das Stahlseil 55 auf die Trommel 21 aufgewickelt und bei 43 auf der Nabe der Seiltrommel 21 festgelegt. Beide Seilrollen 21, 22 drehen absolut synchron mit der Welle 35, da sie beide auf dieser festgekeilt sind.

Wenn sich bei Antrieb durch den Elektromotor 31 die Seiltrommeln 21, 22 bei der Draufsicht gemäß Fig. 5 im Gegensinn des Uhrzeigers drehen, wird das Stahlseil 5 in den Mantel 4 gedrängt und aus dem Mantel 26 abgezogen mit der Folge, daß sich das Gleitstück 16 längs der Profilschiene 20 entsprechend nach unten bewegt. Gleichzeitig wird auch das Stahlseil 55 in den Mantel 56 gedrängt und aus dem Mantel 58 abgezogen, so daß das Gleitstück 21 synchron und auf gleicher Höhe mit dem Gleitstück 16 sich längs der Profilschiene 50 nach unten bewegt. Bei umgekehrter Drehrichtung des aktivierten Gleichstrommotors 31 wird das Stahlseil 5 aus dem Mantel 4 abgezogen und in den Mantel 26 hineingedrängt sowie das Stahlseil 55 aus dem Mantel 56abgezogen und in den Mantel 58 hineingedrängt mit der Folge, daß beide Gleitstücke 16, 21 synchron und auf gleicher Höhe sich längs der Profilschienen 20, 50 nach oben bewegen und die mit ihnen verbundene Linse 1 längs der Innenseite der Fensters 7 nach oben sich hebt.

Es liegt im Rahmen der Erfindung, nur eine Profilschiene 20 vorzusehen, die an der Fahrzeugkarosserie horizontal befestigt ist und auf der zwei mit einem Bowdenzug fest verbundene Gleitstücke hin und her sich bewegen können. Die Linse 1 wird in diesem Fall nicht vertikal, sondern horizontal aus dem Sichtbereich 8 heraus und in diesen hineinbewegt.

Statt der starren Befestigung der Linse 1 mit Spannband 9 an den Befestigungsblechen können Gelenke vorgesehen sein, die ein Abklappen der Linse 1 aus ihrer Position gemäß Figur 1 nach unten aus dem Sichtbereich 8 heraus und ein Hochklappen der Linse 1 in den Sichtbereich 8 erlauben. Die Profilschienen 5 und 50 können dann entfallen.

## Patentansprüche

1. Weitwinkellinse für Fahrzeugheckscheiben, dadurch gekennzeichnet, daß die Weitwinkellinse (1) in einer an der Fahrzeugkarosserie (6) befestigten Führung (10) beweglich gehalten ist.

2. Linse nach Anspruch 1, dadurch gekennzeichnet, daß die Führung (10) etwa parallel zur Unterkante des Heckfensters (7) sich erstreckt.

3. Linse nach Anspruch 1, dadurch gekennzeichnet, daß sich die Führung (10) unterhalb des Sichtbereichs (8) in die Fahrzeugkarosserie (6) erstreckt.

4. Linse nach Anspruch 3, dadurch gekennzeichnet, daß die Linse (1) in einer an der Karosserie (6) angelenkten Halterung gehalten ist, vermöge welcher die Linse (1) nach unten in die Karosserie (6) abschwenkbar ist.

5. Linse nach einem der vorstehenden Ansprüche, dadurch gekennzeichnet, daß ein Antriebsmotor (31) für die Bewegung der Linse vorgesehen ist.

6. Linse nach Anspruch 5, dadurch gekennzeichnet, daß eine Seilwinden-Antriebseinheit (2) für die Bewegung der Linse vorgesehen ist.

7. Linse nach Anspruch 3 oder 5, dadurch gekennzeichnet, daß die Führung zwei parallele an der Karosserie (6) verdeckt angeordnete Profilschienen (20, 50) aufweist, längs deren die Linse (1) beweglich ist.

8. Linse nach Anspruch 7, dadurch gekennzeichnet, daß die Linse (1) mit wenigstens einem auf einer Seiltrommel (22) aufgewickelten Stahlseil (5, 55) verbunden ist.

9. Linse nach Anspruch 8, dadurch gekennzeichnet, daß die Seiltrommel (22) von einem Motor (31) antreibbar ist.
